# EUROPÄISCHE PATENTSCHRIFT

(11) **EP 3 101 240 B1**
(45) Veröffentlichungstag und Bekanntmachung des Hinweises auf die Patenterteilung: **01.04.2020**
(21) Anmeldenummer: 16167824.8
(22) Anmeldetag: 29.04.2016
(51) Int. Cl.: F01D 25/24, F16B 2/14, F01D 25/26, F16B 5/06, F16B 35/06

(54) **KLEMMVORRICHTUNG ZUM VERBINDEN VON FLANSCHSTEGEN**
CLAMPING DEVICE FOR CONNECTING FLANGES
DISPOSITIF DE SERRAGE DESTINÉ À RELIER DES BRIDES

(30) Priorität: 26.05.2015 DE 102015209568
(43) Veröffentlichungstag der Anmeldung: 07.12.2016
(73) Patentinhaber: MTU Aero Engines AG, 80995 München (DE)
(72) Erfinder: Klausmann, Tobias, 80995 München (DE)

(56) Entgegenhaltungen:
- EP-A1- 1 995 415
- EP-A1- 2 096 272
- EP-A1- 2 336 474
- DE-A1- 19 604 702
- DE-A1-102012 007 145

## Beschreibung

Die vorliegende Erfindung betrifft eine Klemmvorrichtung zum Verbinden zweier aneinander anliegender Flanschstege von Bauteilen, und eine Flanschverbindung mit einer Klemmvorrichtung.

Bauteile, die als Komponenten dazu vorgesehen sind, mit anderen Bauteilen zusammengesetzt zu werden, werden häufig mit Flanschen hergestellt. Ein Flansch (bzw. Flanschsteg) eines Bauteils bildet dabei eine Kontaktfläche aus, an der ein anderes Bauteil z.B. verschraubt, verklemmt oder festgeschweißt werden kann und die in vielen Anwendungen auch einer Kraftübertragung und/oder einer Abdichtung dient. Insbesondere können die zu verbindenden Bauteile gleichartige Flansche aufweisen, die bei einer Montage aneinander positioniert und miteinander verbunden werden können.

Derartige Flanschverbindungen finden in vielfältigen Bereichen Anwendung. Mit ihnen können beispielsweise zusammengesetzte Rohre oder Gehäuse hergestellt werden, oder es können verschiedenartige Elemente, wie z.B. ein Motor und ein Gehäuse, aneinander befestigt werden.

In herkömmlichen Flanschverbindungen verwendete Flansche weisen zumeist Durchgangsbohrungen auf. Durch diese Bohrungen werden Schrauben hindurchgeführt und mit Muttern verspannt. Hierbei liegen die Schrauben im Betriebskraftfluss und bestimmen die volle Klemmkraft.

Ein alternatives Verbindungskonzept sieht vor, Flansche mit Hilfe von Keilelementen zu verklemmen. Dabei kann eine Schraube zur Fixierung des Keilelements verwendet werden.

Beispielsweise offenbart die Druckschrift DE 10 159 667 A1 eine Verbindungsvorrichtung zur lösbaren Verbindung zweier Bauteile, von denen eine im Wesentlichen zylindrische Ausnehmung eines ersten der Bauteile und ein im Wesentlichen zylindrischer Ansatz eines zweiten der Bauteile miteinander verspannt werden.

Aus der US 2013/0039749 A1 sind ein Verfahren und eine Vorrichtung zum Ausrichten eines inneren Turbinengehäuses in Bezug auf ein äußeres Turbinengehäuse bekannt.

Die Druckschrift DE 196 04 702 offenbart eine kraft- und formschlüssige Verbindungsanordnung für rotationssymmetrische Bauteile, bei der eine Hülse zwei aneinander anstoßende Flanschbunde übergreift. Mit Hilfe von Zugschrauben werden keilförmige Spannelemente in die Hülse hineingezogen. Die Spannelemente werden dadurch gegen einen der Bunde gepresst. Je nach Art der zu verbindenden Bauteile kann die Positionierung und Montage einer derartigen Verbindungsanordnung jedoch aufwendig sein.

Gemäß einer ebenfalls in der Druckschrift offenbarten Ausführungsform ist die Hülse an dem einen der beiden Bauteile ausgebildet. Auf eine derartig in das Bauteil integrierte Hülse, die über den anliegenden Flansch des anderen Bauteils hinübergreift, wirken durch die Verspannung und bei entsprechender Verwendung der verbundenen Bauteile hohe Biegekräfte, durch die das Material beansprucht und die Verbindung gelockert werden kann.

Ähnliches gilt für eine in der Druckschrift DE 10 2012 007 145 A1 offenbarte lösbare Verbindung von rotationssymmetrischen Bauteilen, die eine Hülse umfasst, die zwei aneinanderliegende Flanschbunde axial übergreift. Weitere Verbindungen, bei denen aneinanderliegende Flanschbunde übergriffen werden, sind aus den Druckschriften EP 2 336 474 A1 und EP 2 096 272 A1 bekannt.

Die vorliegende Erfindung hat die Aufgabe, eine Technik zum Verbinden von Flanschstegen bereitzustellen, mit der die vorgenannten Nachteile überwunden werden können.

Die Aufgabe wird gelöst durch eine Klemmvorrichtung gemäß Anspruch 1 und eine Flanschverbindung gemäß Anspruch 6. Bevorzugte Ausführungsformen sind in den Unteransprüchen offenbart.

Eine Klemmvorrichtung gemäß der vorliegenden Erfindung dient einem Verbinden zweier aneinander anliegender Flanschstege zweier Bauteile, also dem Verbinden eines ersten Flanschsteges eines ersten Bauteils mit einem zweiten Flanschsteg eines zweiten Bauteils, wobei die Flanschstege aneinander anliegend positioniert sind. Die Klemmvorrichtung bildet einen Rahmen aus, der dazu eingerichtet bzw. geeignet ist, von den beiden aneinander anliegenden Flanschstegen durchstoßen zu werden; auf diese Weise umrandet der Rahmen die beiden Flanschstege.

Die Klemmvorrichtung weist weiterhin eine Verspannungsvorrichtung auf, die dazu eingerichtet ist, die beiden aneinander anliegenden Flanschstege im Rahmen zu verspannen.

Eine erfindungsgemäße Flanschverbindung verbindet ein erstes mit einem zweiten Bauteil. Das erste Bauteil weist dabei mindestens einen ersten Flanschsteg auf, der an einem zweiten Flanschsteg des zweiten Bauteils anliegt. Der erste und der zweite Flanschsteg durchstoßen einen Rahmen einer erfindungsgemäßen Klemmvorrichtung.

Bei dem ersten und dem zweiten Bauteil handelt es sich vorzugsweise um zwei Gehäusebauteile einer Strömungsmaschine, insbesondere einer Fluggasturbine oder einer stationären Industriegasturbine. Vorzugsweise sind die beiden Gehäusebauteile in Umfangsrichtung nicht segmentiert ausgebildet. Ferner sind die beiden Bauteile im montierten Zustand der Strömungsmaschine vorzugsweise konzentrisch zur Maschinenachse der Strömungsmaschine angeordnet.

Der Terminus "durchstoßen" ist in dieser Schrift vorzugsweise aber nicht zwingend so zu verstehen, dass die durchstoßenden Flanschstege vollständig durch den Rahmen ragen oder auf einer oder beiden Seiten des Rahmens aus diesem hervortreten müssen. Er bezieht sich insbesondere auf ein Verhältnis zwischen einer Rahmenebene, in der der Rahmen die Flanschstege umrandet (also umläuft), und einer (Durchstoß-)Richtung, in der die beiden Flanschstege in den Rahmen hineinragen (also den Rahmen durchstoßen): Diese Richtung und die Rahmenebene sind dabei gegeneinander abgewinkelt, vorzugsweise im Wesentlichen senkrecht zueinander angeordnet. Eine Durchstoßrichtung der Flanschstege entspricht vorzugsweise einer Flanschrichtung, also einer Richtung, in der die Flanschstege vom jeweiligen Bauteil abstehen.

Mit Hilfe des umrandenden Rahmens können die Flanschstege somit mittels einer erfindungsgemäßen Klemmvorrichtung (bzw. in einer erfindungsgemäßen Flanschverbindung) fest miteinander verbunden werden, ohne dass Biegemomente erzeugt werden. Zudem wird die Verspannungsvorrichtung lediglich auf Zug belastet. Insbesondere bei verbundenen Bauteilen, die äußeren Belastungen, wie beispielsweise Einwirkungen hebelnder Kräfte, standhalten müssen, gewährleistet eine erfindungsgemäße Klemmvorrichtung daher eine dauerhaft stabile Verbindung.

Der Rahmen kann mindestens in einem Abschnitt eine Grundfläche aufweisen, die dazu vorgesehen ist, im verspannten Zustand der Klemmvorrichtung den verbundenen Bauteilen zugewandt angeordnet zu liegen oder sogar auf mindestens einem der Bauteile aufzuliegen. Die Grundfläche kann einen Außenrand mit einem oder mehreren polygonförmigen (z.B. rechtwinkligen) oder geschwungenen Abschnitt(en) aufweisen. Vorzugsweise liegt die Grundfläche senkrecht zur Flanschrichtung und/oder senkrecht zu einer Kontaktfläche von erstem und zweitem Flanschsteg. Insbesondere kann die Grundfläche eine Rahmenebene definieren, in der die Grundfläche liegt.

Die Flanschstege sind vorzugsweise im Wesentlichen quaderförmig oder umfassen zumindest einen quaderförmigen Abschnitt.

Vorzugsweise liegen das erste und das zweite Bauteil entlang einer Verbindungskante aneinander an und kreuzt der Rahmen beim Umranden der Flanschstege mindestens zweimal die Verbindungskante der Bauteile.

Die Verspannungsvorrichtung kann eine Schraube und einen mit der Schraube positionierbaren Keil umfassen. Der Keil ist dabei dazu eingerichtet, beim Verspannen in eine Verspannungsrichtung getrieben oder gezogen zu werden; die Verspannungsrichtung stimmt dabei vorzugsweise mit einer Schraubachse der Schraube überein. Gemäß einer bevorzugten Ausführungsform weist ein Innenumfang des Rahmens in einem verspannten Zustand einen Durchmesser auf, der höchstens dreimal, bevorzugter höchstens doppelt, noch bevorzugter höchstens 1,5 mal oder im Wesentlichen genauso so groß ist wie ein Durchmesser eines im Wesentlichen zylindrisch geformten Gewindeteils einer Schraube der Verspannungsvorrichtung. Diese Größenverhältnisse bieten den Vorteil einer besonders gleichmäßigen Krafteinwirkung der Verspannungsvorrichtung.

Insbesondere kann die Verspannungsvorrichtung einen Spannkeil und eine Zugschraube aufweisen, mit welcher der Spannkeil durch eine Einfassung in der Klemmvorrichtung hindurch angezogen werden kann, um die beiden Flanschstege miteinander zu verspannen.

Besonders bevorzugt ist eine Ausführungsform, bei der die Verspannungsvorrichtung einen Keilbolzen umfasst. Insbesondere kann die Verspannungsvorrichtung eine Keilschraube und eine Mutter umfassen. Beispielsweise kann bei einem Anziehen der Mutter der Keil der Keilschraube in ein (z.B. sich verengendes) Gehäuse gezogen und so die Spannung hergestellt werden. Insbesondere können die beiden Flanschstege gemäß dieser Ausführungsform somit durch Anziehen oder Lösen der Mutter miteinander verspannt bzw. voneinander gelöst werden. Die Verwendung einer Keilschraube, auf die zum Verspannen lediglich die Mutter aufgeschraubt werden muss, gewährleistet eine besonders einfach zu realisierende Verbindung und Montage.

Gemäß einer bevorzugten Ausführungsform einer erfindungsgemäßen Klemmvorrichtung umfasst die Verspannungsvorrichtung einen Keil mit einer Pressfläche, die dazu eingerichtet ist, beim Verspannen der Flanschstege gegen einen der beiden aneinander anliegenden Flanschstege zu drücken.

Aufgrund des unmittelbaren Angreifens an den einen der Flanschstege weist ein Klemmelement mit einer derartigen Verspannungsvorrichtung eine besonders günstige Kraftübertragung auf und gewährleistet damit ein verlustarmes Verspannen.

Gemäß einer Ausführungsform einer erfindungsgemäßen Klemmvorrichtung erstreckt sich eine derartige Pressfläche in eine Richtung (parallel) zu einer Verspannungsrichtung des Keils, liegt also in einer Ebene, die einen Richtungsvektor in die Richtung hat, in die der Keil zum Verspannen gezogen oder getrieben werden kann; in einer Ausführungsform, bei der das Verspannungselement eine Keilschraube umfasst, erstreckt sich die Pressfläche somit vorzugsweise in Richtung (parallel zu) einer Schraubachse der Keilschraube. Deren Keil kann somit eine einseitige Schräge an lediglich einer den Flanschstegen abgewandten Seite aufweisen.

Eine derartige Ausführungsform kann je nach einer geometrischen Ausgestaltung der beiden zu verbindenden Bauteile oder ihrer Flanschstege vorteilhaft sein. Insbesondere erlaubt sie eine Ausrichtung der Klemmvorrichtung, bei der eine Schraubachse einer den Keil anziehenden Zugschraube oder einer auf einer Keilschraube verschraubten Mutter parallel zu einer Flanschrichtung angeordnet und somit gegebenenfalls gut zugänglich ist.

Gemäß einer bevorzugten Ausführungsform ist der Keil an einer den Flanschstegen zugewandten Seite im Wesentlichen ebenso geformt wie an einer den Flanschstegen abgewandten Seite; beispielsweise kann eine Pressfläche in Bezug auf eine Schraubachse (einer Keilschraube, die den Keil ausbildet, oder einer Zugschraube, die den Keil anzieht) in gleichem Winkel geneigt ausgebildet sein wie eine den Flanschstegen abgewandte Oberfläche des Keils. Insbesondere kann ein derartiger Keil einen Längsschnitt entlang einer Schraubachse (einer Keilschraube, die den Keil ausbildet, oder einer Zugschraube, die den Keil anzieht) aufweisen, der symmetrisch zur Schraubachse ausgebildet ist; alternativ oder zusätzlich kann der Keil mindestens einen Querschnitt orthogonal zur Schraubachse aufweisen, der punktsymmetrisch zu einem Durchstoßpunkt der Schraubachse ist; besonders bevorzugt ist eine Ausführungsform, bei der jeder derartige Querschnitt derart punktsymmetrisch ist (z.B. rechteckig, insbesondere quadratisch).

Eine solche gleichartige geometrische Form des Keils an der den Flanschstegen zugewandten Seite und der den Flanschstegen abgewandten Seite (zwischen denen beispielsweise die Schraubachse der Keilschraube oder der Zugschraube angeordnet sein kann) ermöglicht ein besonders ausgewogenes Kräfteverhältnis von Schraub- und Klemmkraft der Verspannungsvorrichtung. Ungleichmäßige Kräfte in der Verspannung werden somit vermieden, wodurch die Klemmung besonders solide ausgebildet werden kann.

Gemäß einer Ausführungsform einer erfindungsgemäßen Flanschverbindung umfasst ein erster der Flanschstege mindestens einen Sicherungsvorsprung an einer vom Bauteil abgewandten Seite. Der Rahmen der Klemmvorrichtung ist dabei mindestens in einem Abschnitt zwischen einer Bauteiloberfläche, von welcher der erste Flanschsteg absteht, und dem mindestens einen Sicherungsvorsprung am Flanschsteg angeordnet. Ein derartiger Sicherungsvorsprung kann beispielsweise als ein Steg ausgebildet sein. Er verhindert ein Abrutschen der Klemmvorrichtung von den durch sie miteinander verspannten Flanschstegen, dient also einer Sicherung der Flanschverbindung.

Gemäß einer bevorzugten Ausführungsform der vorliegenden Erfindung umfasst die Klemmvorrichtung eine Einfassung mit einer Durchgangsbohrung für die Verspannungsvorrichtung. Durch die Einfassung kann beispielsweise eine Keilschraube der eine Zugschraube der Verspannungsvorrichtung geführt sein; dabei sind vorzugsweise ein Keil der Keilschraube und eine Mutter auf der Keilschraube bzw. ein der Zugschraube anzuziehender Keil und ein Kopf der Zugschraube an voneinander verschiedenen Seiten der Einfassung angeordnet. Vorzugsweise ist eine derartige Einfassung einteilig mit dem Rahmen ausgebildet. Dadurch kann eine besonders gute Stabilität der Klemmvorrichtung auch bei großer Spannung der Spannungsvorrichtung gewährleistet werden.

Alternativ oder zusätzlich kann in einer erfindungsgemäßen Flanschverbindung einer der Flanschstege eine Einfassung mit einer Durchgangsbohrung für die Verspannungsvorrichtung aufweisen. Analog zum Obigen kann durch die Einfassung in dem Flanschsteg beispielsweise eine Keilschraube der Verspannungsvorrichtung geführt sein; dabei sind vorzugsweise ein Keil der Keilschraube und eine Mutter auf der Keilschraube bzw. ein der Zugschraube anzuziehender Keil und ein Kopf der Zugschraube an voneinander verschiedenen Seiten der Einfassung angeordnet.

Ein derartiger Flanschsteg ist vorzugsweise in sich abgewinkelt ausgebildet mit einem ersten Abschnitt, der durch den Rahmen der Klemmverbindung verläuft, und einem zweiten Abschnitt, der einen Überhang über den zweiten Flanschsteg ausbildet und die Einfassung für die Verspannungsvorrichtung ausbildet.

Bei dieser Ausführungsform ist der eine Flanschsteg mit der Klemmvorrichtung verschraubt, was eine besonders gute Sicherung der Flanschverbindung gegen ein Abrutschen der Klemmvorrichtung bedeutet.

Vorteilhaft ist eine Ausführungsform, bei der das erste und das zweite mittels der Flanschverbindung verbundene Bauteil entlang einer Verbindungskante der beiden Bauteile aneinander anstoßen, wobei das erste und das zweite Bauteil entlang der Verbindungskante eine Mehrzahl an (vorzugsweise gleichartigen) Flanschstegen aufweisen. Ein Abstand zwischen zwei benachbarten Flanschstegen desselben Bauteils beträgt dabei vorzugsweise jeweils höchstens das Doppelte, bevorzugter höchstens das 1,5-fache einer Ausdehnung eines Flanschsteges entlang (also parallel zur Richtung) der Verbindungskante; noch bevorzugter sind der genannte Abstand und die genannte Ausdehnung im Wesentlichen gleich groß. Die Flanschstege des ersten Bauteils sind vorzugsweise jeweils mittels einer Klemmvorrichtung gemäß einer Ausführungsform der vorliegenden Erfindung mit einem Flanschsteg des zweiten Bauteils verbunden.

Die genannten Abstände gewährleisten eine sichere und dichte Verbindung der beiden Bauteile, indem nicht miteinander verspannte Abschnitte gegenüber miteinander verspannten Abschnitten die angegebene, relativ geringe Ausdehnung haben. Dies ist beispielsweise besonders vorteilhaft, wenn die Verbindung der beiden Bauteile gegen einen Fluiddurchlass abgedichtet sein soll.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt.

Es zeigen schematisch:
- Figur 1: eine Flanschverbindung mit Klemmvorrichtung gemäß einer beispielhaften Ausführungsform der vorliegenden Erfindung;
- Figur 2: eine Flanschverbindung eine Klemmvorrichtung gemäß einer alternativen Ausführungsform der vorliegenden Erfindung;
- Figur 3: eine Flanschverbindung eine Klemmvorrichtung gemäß einer weiteren alternativen Ausführungsform der vorliegenden Erfindung;
- Figur 4: eine Flanschverbindung gemäß Figur 1 in einer ersten perspektivischen Ansicht;
- Figur 5: eine Flanschverbindung gemäß Figur 1 in einer zweiten perspektivischen Ansicht.

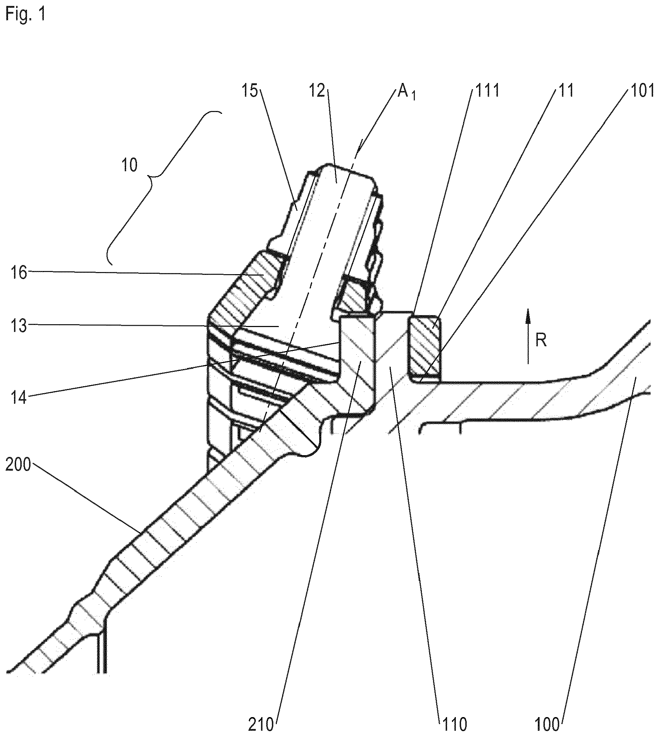

Figur 1 zeigt schematisch eine Flanschverbindung mit mehreren Klemmvorrichtungen gemäß der vorliegenden Erfindung, die ein erstes Bauteil 100 und ein zweites Bauteil 200 miteinander verbinden. Zur Kenntlichmachung eines inneren Aufbaus der Klemmvorrichtung ist eine in der Darstellung vorderste Klemmvorrichtung 10 in einem Längsschnitt gezeigt.

Die Bauteile 100, 200 weisen jeweils (insbesondere) einen im Wesentlichen quaderförmigen Flanschsteg 110 bzw. 210 auf, der in eine Flanschrichtung R vom jeweiligen Bauteil 100, 200 absteht. Insbesondere weisen die Flanschstege jeweils drei gegenüber dem jeweiligen Bauteil abgewinkelte Seitenflächen und eine Kontaktfläche auf, an der die Flanschstege 110, 210 aneinander anliegend angeordnet sind.

Die Klemmvorrichtung 10 ist lokal in einem Abschnitt einer Verbindungskante von erstem und zweitem Bauteil 100, 200 angeordnet und bildet dort einen Rahmen 11 aus, der in der Darstellung der Figur 1 die beiden aneinander anliegenden Flanschstege 110, 210 umrandet. Dabei umläuft er die Seiten- und Kontaktflächen der Flanschstege und kreuzt die Verbindungskante zweimal (nicht dargestellt), in der Darstellungsperspektive der Figur 1 nämlich je einmal vor und hinter den Flanschstegen 110, 210.

Die beiden Flanschstege 110, 210 durchstoßen den Rahmen 11; insbesondere umrandet der dargestellte Rahmen die beiden Flanschstege entlang einer Rahmenebene, die im Wesentlichen senkrecht zur durch die Flanschrichtung R gegebenen Durchstoßrichtung der beiden Flanschstege liegt. Zudem ist die Rahmenebene gegenüber einer Kontaktfläche der beiden Flanschstege abgewinkelt, im dargestellten Beispiel ebenfalls um 90°.

Die Klemmvorrichtung 10 weist weiterhin eine Verspannungsvorrichtung auf, die im gezeigten Beispiel eine Keilschraube 12 mit Keil 13 sowie eine Mutter 15 umfasst. Die Keilschraube 12 ist durch eine Durchgangsbohrung einer Einfassung 16 der Klemmvorrichtung 10 geführt. Die auf die Keilschraube aufgezogene Mutter 15 verspannt den Keil 13 gegen die Einfassung. Dabei drückt eine Pressfläche 14 des Keils 13 gegen den Flanschsteg 210. Dadurch wird eine Verspannungskraft ausgeübt, die in Richtung der umrandeten Flanschstege wirkt.

Der Flanschsteg 110 weist an einer dem übrigen Bauteil 100 abgewandten Seite (also an einer Stirnfläche des Flanschstegs 110) einen Sicherungsvorsprung 111 auf. Der Rahmen ist in einem Abschnitt an der in der Darstellung rechten Seite zwischen einer Bauteiloberfläche 101 des Bauteils 100 und dem Sicherungsvorsprung 111 am Flanschsteg angeordnet. Dadurch ist die Klemmvorrichtung 10 gegen ein Abrutschen von den aneinander anliegenden Flanschstegen gesichert.

In dem in Figur 1 gezeigten Ausführungsbeispiel weist der Keil 13 an der den Flanschstegen zugewandten (in der Figur rechten) Seite die gleiche Form auf wie an der den Flanschstegen abgewandten (in der Figur linken) Seite; im dargestellten Längsschnitt der Keilschraube ist der Keil 13 daher symmetrisch zur Schraubachse A₁ ausgebildet, die gegenüber der Pressfläche 14 abgewinkelt ist (also nicht in einer Ebene parallel zur Pressfläche verläuft).

Die symmetrische Ausbildung des Keils ermöglicht ein ausgewogenes Kräfteverhältnis von Schraub- und Klemmkraft der Verspannungsvorrichtung und damit eine besonders solide Verbindung der beiden Flanschstege 110, 210.

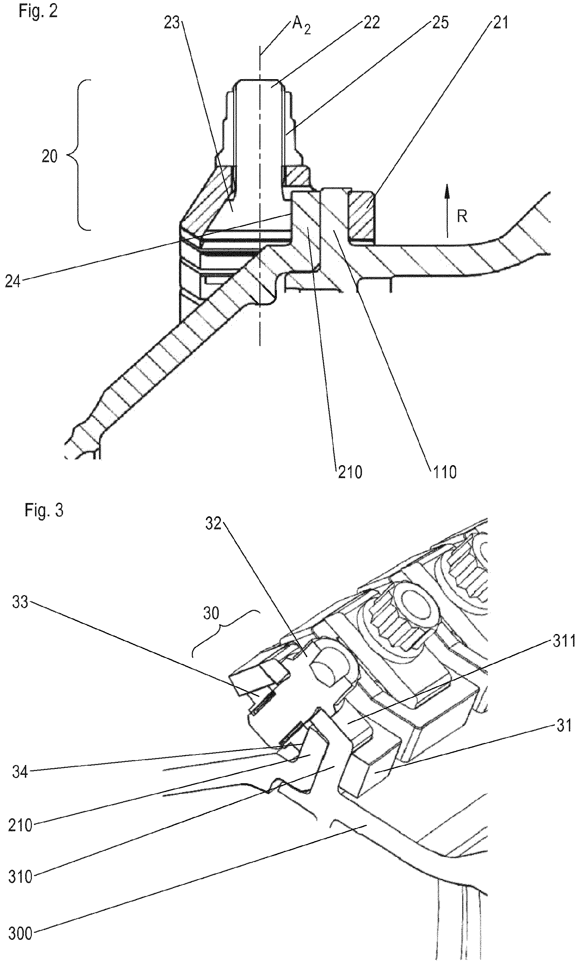

In der Figur 2 sind die beiden Flanschstege 110, 210 mit einer alternativen Ausführungsform einer erfindungsgemäßen Klemmvorrichtung 20 verbunden. Analog zur Klemmvorrichtung 10 bildet auch die Klemmvorrichtung 20 einen Rahmen 21 aus, der die Flanschstege 110, 210 umrandet und dabei von ihnen durchstoßen wird. Die Klemmvorrichtung 20 weist zudem eine Verspannungsvorrichtung auf, die eine Keilschraube 22 und eine Mutter 25 umfasst. Eine Pressfläche 24 des Keils 23 der Keilschraube 22 drückt dabei gegen den Flanschsteg 210. Beim Verspannen der Mutter auf der Keilschraube wird deren Keil 23 in eine Verspannungsrichtung parallel zu einer Schraubachse A₂ gezogen. Die Verspannungsrichtung verläuft dabei parallel zur Pressfläche 24.

Aufgrund dieser Ausführung ist es möglich, die Klemmvorrichtung 20 so auf die aneinander anliegenden Flanschstege 110, 210 aufzusetzen, dass die Schraubachse A₂ parallel zur Flanschrichtung R verläuft. Insbesondere ist die Klemmvorrichtung gegenüber den Flanschstegen daher nicht geneigt.

Dadurch können beispielsweise Bauteile miteinander verbunden werden, bei denen eine schräg ausgerichtete Mutter wegen der geometrischen Ausgestaltung der Bauteile problematisch wäre.

In Figur 3 ist eine alternative Flanschverbindung gemäß einer Ausführungsform der vorliegenden Erfindung dargestellt. Der Flanschsteg 210 des Bauteils 200 ist hier mittels einer Klemmvorrichtung 30 mit einem in sich abgewinkelten Flanschsteg 310 eines Bauteils 300 verbunden. Die Klemmvorrichtung 30 bildet einen Rahmen 31, den die Flanschstege 210 und 310 durchstoßen; eine den verbundenen Bauteilen zugewandte Grundfläche eines Rahmenabschnitts umfasst zwei parallele, rechteckige Abschnitte, die von einer senkrecht zu diesen beiden Abschnitten angeordneten Mittelfläche verbunden werden.

Der Rahmen umrandet auf diese Weise den Flanschsteg 210 sowie einen ersten Abschnitt des Flanschstegs 310; ein zweiter, abgewinkelter Abschnitt des Flanschstegs 310 bildet einen Überhang über den anderen Flanschsteg 210 und eine Einfassung 311 für die Spannungsvorrichtung der Klemmvorrichtung 30 aus. Diese Spannungsvorrichtung umfasst im dargestellten Beispiel eine Zugschraube 32 und einen Spannkeil 33, der im verspannten Zustand mit einer Pressfläche 34 gegen den Flanschsteg 210 drückt.

Bei einer derartigen Ausführungsform ist die Klemmvorrichtung besonders gut gegen ein Abrutschen gesichert.

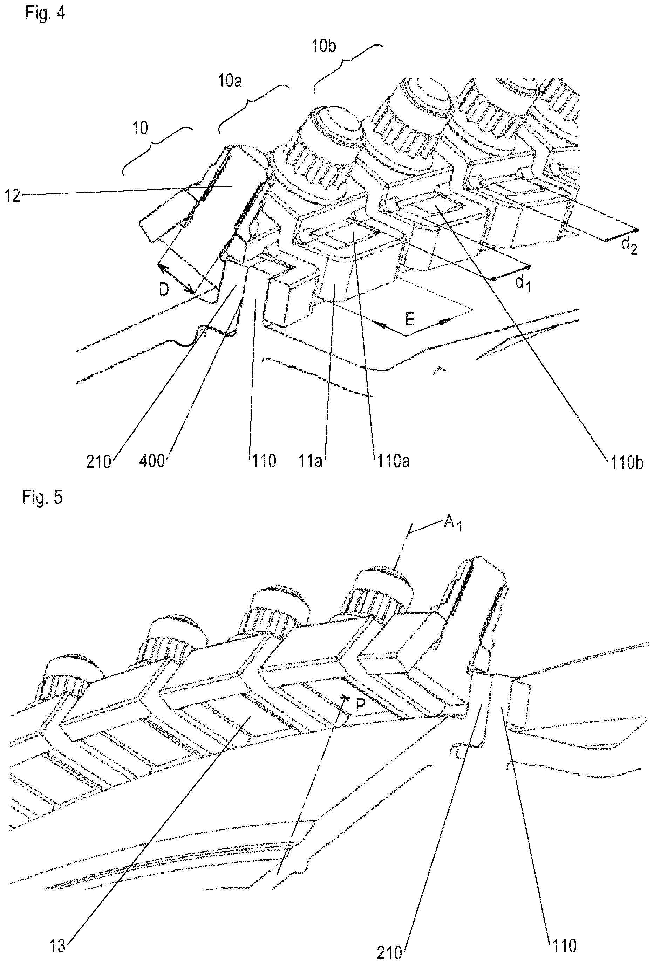

In Figur 4 ist eine Flanschverbindung in einer ersten perspektivischen Ansicht dargestellt. Die Flanschverbindung umfasst dabei eine Mehrzahl an nebeneinander entlang einer Verbindungskante 400 eines ersten und zweiten Bauteils 100, 200 angeordneten Klemmvorrichtungen 10, 10a, 10b entsprechend der in Figur 1 gezeigten Ausführungsform, die jeweils einen Rahmen 11, 11a ausbilden.

Beispielsweise der Rahmen 11a der Klemmvorrichtung 10a verläuft dabei entlang einer Rahmenebene E, die senkrecht zu einer Flanschrichtung liegt, in der die vom Rahmen 11a umrandeten Flanschstege vom jeweiligen Bauteil abstehen und in der sie den Rahmen durchstoßen. Eine den verbundenen Bauteilen zugewandte Grundfläche eines Abschnitts des Rahmens, die in der Rahmenebene E liegt, umfasst zwei parallele, rechteckige Abschnitte, die von einer senkrecht zu diesen beiden Abschnitten angeordneten Mittelfläche verbunden werden.

Die Flanschstege sind in der in Figur 4 dargestellten Ausführungsform jeweils gleichartig geformt. Entlang der Verbindungskante 400 (und in Richtung der Verbindungskante) haben die Flanschstege 110, 110a, 110b jeweils eine Ausdehnung d₂. Benachbarte Flanschstege 110a, 110b eines Bauteils sind dabei jeweils um einen Abstand d₁ voneinander beabstandet. Vorzugsweise ist dabei d₁ maximal doppelt so groß wie d₂, noch bevorzugter maximal anderthalb mal so groß oder im Wesentlichen genauso groß wie d₂, wie es insbesondere in der in Figur 4 dargestellten beispielhaften Ausführungsform der Fall ist. Diese Abstände gewährleisten eine besonders gute Dichtheit der verbundenen Bauteile.

Wie ebenfalls in der Figur 4 gezeigt ist, weist ein im Wesentlichen zylindrisch geformter Gewindeteil der Keilschraube 12 einen Durchmesser D auf. Die jeweilige Ausdehnung d₂ der einzelnen Flanschstege 110, 110a, 110b ist vorzugsweise höchstens doppelt, noch bevorzugter höchstens 1,5 mal so groß ist wie ein Durchmesser eines im Wesentlichen zylindrisch geformten Gewindeteils einer Schraube der Verspannungsvorrichtung. Diese Größenverhältnisse bieten den Vorteil einer besonders gleichmäßigen Krafteinwirkung der Verspannungsvorrichtung.

In Figur 5 ist die Anordnung der Figur 4 aus einer anderen Perspektive gezeigt. Wie in der Figur ersichtlich, haben die Keile 13 der Keilschraube in der dargestellten Ausführungsform jeweils eine quadratische Grundfläche. Insbesondere ist in dieser Ausführungsform jeder in einer Ebene orthogonal zur Schraubachse A₁ verlaufende Querschnitt der Keile 13 punktsymmetrisch zu einem Durchstoßpunkt P der Schraubachse A₁.

### Bezugszeichen

- 10,20: Klemmvorrichtung
- 11a, 11b, 21, 31: Rahmen
- 12, 22: Keilschraube
- 13: Keil
- 14, 24, 34: Pressfläche
- 15, 25: Mutter
- 16: Einfassung
- 32: Zugschraube
- 33: Spannkeil

- 100, 200, 300: Bauteil
- 101: Bauteiloberfläche
- 110, 110a, 110b, 210, 310: Flanschsteg
- 111: Sicherungsvorsprung
- 311: Einfassung
- 400: Verbindungskante

- A₁, A₂: Schraubenachse
- d₁: Abstand zwischen zwei benachbarten Flanschstegen
- d₂: Erstreckung eines Flanschstegs
- E: Rahmenebene
- D: Durchmesser einer Keilschraube
- P: Durchstoßpunkt
- R: Flanschrichtung

## Patentansprüche

1. Klemmvorrichtung (10, 10a, 10b, 20, 30) zum Verbinden zweier aneinander anliegender Flanschstege (110, 210, 310) von Bauteilen,
wobei die Klemmvorrichtung einen Rahmen (11, 21, 31) ausbildet;
und wobei die Klemmvorrichtung eine Verspannungsvorrichtung (12, 13, 22, 23, 32, 33) umfasst, die dazu eingerichtet ist, die beiden aneinander anliegenden Flanschstege im Rahmen zu verspannen, **dadurch gekennzeichnet, dass**
der Rahmen (11, 21, 31) dazu eingerichtet ist, von den beiden aneinander anliegenden Flanschstegen durchstoßen zu werden und dabei die beiden aneinander anliegenden Flanschstege zu umranden.

2. Klemmvorrichtung gemäß Anspruch 1, wobei die Verspannungsvorrichtung einen Keil (13, 23, 33) mit einer Pressfläche (14, 24, 34) umfasst, die dazu eingerichtet ist, beim Verspannen der Flanschstege gegen einen (210) der beiden aneinander anliegenden Flanschstege zu drücken.

3. Klemmvorrichtung gemäß Anspruch 2, wobei der Keil dazu eingerichtet ist, beim Verspannen in eine Verspannungsrichtung getrieben oder gezogen zu werden, und wobei die Pressfläche (24) sich parallel zur Verspannungsrichtung erstreckt.

4. Klemmvorrichtung gemäß einem der vorherigen Ansprüche, wobei der Keil an einer den Flanschstegen zugewandten Seite und an einer den Flanschstegen abgewandten Seite im Wesentlichen gleichartig geformt ist.

5. Klemmvorrichtung gemäß einem der vorherigen Ansprüche, wobei die Verspannungsvorrichtung eine Keilschraube (22) und eine Mutter (25) umfasst.

6. Klemmvorrichtung gemäß einem der vorherigen Ansprüche, die eine Einfassung (16) mit Durchgangsbohrung für die Verspannungsvorrichtung aufweist,

7. Flanschverbindung eines ersten mit einem zweiten Bauteils, wobei das erste Bauteil (100) mindestens einen ersten Flanschsteg (110) aufweist, der in der Flanschverbindung an einem zweiten Flanschsteg (210) des zweiten Bauteils (200) anliegt, und wobei die Flanschverbindung eine Klemmvorrichtung (10, 10a, 10b, 20, 30) gemäß einem der Ansprüche 1 bis 6 aufweist, deren Rahmen der erste und der zweite Flanschsteg durchstoßen.

8. Flanschverbindung gemäß Anspruch 7, wobei der Rahmen mindestens in einem Abschnitt zwischen einer Bauteiloberfläche (101), von der einer der Flanschstege (110) absteht, und einem Sicherungsvorsprung (111) am Flanschsteg angeordnet ist.

9. Flanschverbindung gemäß Anspruch 7, wobei der erste Flanschsteg eine Einfassung (311) für die Verspannungsvorrichtung ausbildet.

10. Flanschverbindung gemäß einem der Ansprüche 7 bis 9, wobei das erste und das zweite Bauteil jeweils entlang einer Verbindungskante (400) eine Mehrzahl an Flanschstegen aufweisen, wobei ein Abstand (d₁) zwischen zwei benachbarten Flanschstegen jeweils maximal das Doppelte einer Ausdehnung (d₂) eines Flanschsteges entlang der Verbindungskante beträgt oder diese Ausdehnung (d₂) im Wesentlichen entspricht.

## Claims

1. Clamping device (10, 10a, 10b, 20, 30) for connecting two mutually abutting flange projections (110, 210, 310) of components, the clamping device forming a frame (11, 21, 31);
and the clamping device comprising a bracing device (12, 13, 22, 23, 32, 33) which is designed to brace the two mutually abutting flange projections in the frame, **characterized in that** the frame (11, 21, 31) is designed to be penetrated by the two mutually abutting flange projections, and thus to surround the two mutually abutting flange projections.

2. Clamping device according to claim 1, wherein the bracing device comprises a wedge (13, 23, 33) having a pressing surface (14, 24, 34) which is designed to press against one (210) of the two mutually abutting flange projections when the flange projections are being braced.

3. Clamping device according to claim 2, wherein the wedge is designed to be driven or pulled in a bracing direction during the bracing, and wherein the pressing surface (24) extends in parallel with the bracing direction.

4. Clamping device according to any of the preceding claims, wherein the wedge is formed substantially identically on a side facing the flange projections and on a side facing away from the flange projections.

5. Clamping device according to any of the preceding claims, wherein the bracing device comprises a wedge bolt (22) and a nut (25).

6. Clamping device according to any of the preceding claims, which has a surround (16) having a through-hole for the bracing device.

7. Flange connection of a first component to a second component, wherein the first component (100) has at least one first flange projection (110) which abuts against a second flange projection (210) of the second component (200) in the flange connection, and wherein the flange connection has a clamping device (10, 10a, 10b, 20, 30) according to any of claims 1 to 6, the frame of which is penetrated by the first and the second flange projection.

8. Flange connection according to claim 7, wherein the frame is arranged, at least in one portion, between a component surface (101) from which one of the flange projections (110) projects, and a securing protrusion (111) on the flange projection.

9. Flange connection according to claim 7, wherein the first flange projection forms a surround (311) for the bracing device.

10. Flange connection according to any of claims 7 to 9, wherein the first and the second component each have a plurality of flange projections along a connecting edge (400), wherein a distance (d₁) between two adjacent flange projections is in each case a maximum of twice an extension (d₂) of a flange projection along the connecting edge, or substantially corresponds to said extension (d₂).

## Revendications

1. Dispositif de serrage (10, 10a, 10b, 20, 30) destiné à relier deux brides (110, 210, 310) de contact de composants, le dispositif de serrage formant un cadre (11, 21, 31) ;
et le dispositif de serrage comprenant un élément de contrainte (12, 13, 22, 23, 32, 33) qui est conçu pour tendre les deux brides de contact dans le cadre, **caractérisé en ce que** le cadre (11, 21, 31) est conçu pour être percé par les deux brides de contact et pour entourer les deux brides de contact.

2. Dispositif de serrage selon la revendication 1, dans lequel l'élément de contrainte comprend un coin (13, 23, 33) comportant une surface de pression (14, 24, 34), laquelle est conçue pour presser l'une (210) des deux brides de contact lors du serrage des brides.

3. Dispositif de serrage selon la revendication 2, dans lequel le coin est conçu pour être entraîné ou tiré dans le sens de serrage lors du serrage, et dans lequel la surface de pression (24) s'étend parallèlement au sens de serrage.

4. Dispositif de serrage selon l'une des revendications précédentes, dans lequel le coin est réalisé sensiblement de manière identique sur un côté faisant face aux brides et sur un côté opposé aux brides.

5. Dispositif de serrage selon l'une des revendications précédentes, dans lequel l'élément de contrainte comprend une vis à coin (22) et un écrou (25).

6. Dispositif de serrage selon l'une des revendications précédentes, lequel présente une enceinte (16) comportant un trou traversant pour l'élément de contrainte.

7. Liaison à bride d'un premier composant avec un second composant, dans laquelle le premier composant (100) présente au moins une première bride (110) qui repose contre une seconde bride (210) du second composant (200) dans la liaison à bride, et la liaison à bride présentant un dispositif de serrage (10, 10a, 10b, 20, 30) selon l'une des revendications 1 à 6, dispositif dont le cadre perce la première bride et la seconde bride.

8. Liaison à bride selon la revendication 7, dans laquelle le cadre est disposé au moins dans une section entre une surface de composant (101), à partir de laquelle fait saillie l'une des brides (110), et une saillie de retenue (111) sur la bride.

9. Liaison à bride selon la revendication 7, dans laquelle la première bride forme une enceinte (311) pour l'élément de contrainte.

10. Liaison à bride selon l'une des revendications 7 à 9, dans laquelle le premier composant et le second composant présentent respectivement une pluralité de brides le long d'un bord de liaison (400), une distance (d₁) entre deux brides adjacentes étant respectivement au maximum le double d'une extension (d₂) d'une bride le long du bord de liaison, ou correspondant sensiblement à cette extension (d₂).
